**Europäisches Patentamt**

**European Patent Office**

**Office européen des brevets**

(19)

(11) Veröffentlichungsnummer: **0 063 825**
**B1**

(12) ## EUROPÄISCHE PATENTSCHRIFT

(45) Veröffentlichungstag der Patentschrift:
**29.01.86**

(51) Int. Cl.⁴: **B 30 B 11/00, A 23 N 17/00**

(21) Anmeldenummer: **82103686.0**

(22) Anmeldetag: **29.04.82**

(54) **Verfahren und Vorrichtung zur Steuerung einer Würfelpressanlage.**

(30) Priorität: **29.04.81 CH 2776/81**

(43) Veröffentlichungstag der Anmeldung:
**03.11.82 Patentblatt 82/44**

(45) Bekanntmachung des Hinweises auf die Patenterteilung:
**29.01.86 Patentblatt 86/5**

(84) Benannte Vertragsstaaten:
**AT BE CH DE FR GB IT LI NL SE**

(56) Entgegenhaltungen:
**CH - A - 600 792**
**DE - A - 2 850 910**
**FR - A - 1 301 405**
**US - A - 3 573 924**
**US - A - 3 932 736**

(73) Patentinhaber: **Gebrüder Bühler AG, CH-9240 Uzwil (CH)**

(72) Erfinder: **Schaffner, Hanspeter, Armetsholzstrasse 2, CH-9244 Niederuzwil (CH)**
Erfinder: **Wetzel, Willi, Sonnenbühl 1, CH-9240 Uzwil (CH)**
Erfinder: **Kummer, Emanuel, Bachstrasse 40, CH-9202 Gossau (CH)**

(74) Vertreter: **Dipl.-Phys.Dr. Manitz Dipl.-Ing. Finsterwald Dipl.-Ing. Grämkow Dipl.-Chem.Dr. Heyn Dipl.-Phys.Rotermund, B.Sc. Morgan Robert-Koch-Strasse 1, D-8000 München 22 (DE)**

## Beschreibung

Die Erfindung betrifft ein Verfahren zur Steuerung einer Würfelpressanlage, bei welcher das Produkt mittels Pressrollen durch Bohrungen einer Pressform hindurch gepresst wird, wobei die Leistung E, kW des Pressenmotors durch Veränderung der der Würfelpresse zugeführten Produktmenge $\dot{M}$, kg/s auf einem Sollwert konstant gehalten und die Temperatur T, °C des zugeführten Produktes durch eine Temperaturregelung auf einen Sollwert geregelt wird. Die Erfindung betrifft ebenfalls eine Vorrichtung zur Steuerung der Würfelpressanlage.

Es ist bekannt, Rohstoffe oder Rohstoffmischungen, z.B. Viehfuttermittel, zu Würfeln zu verarbeiten, in Würfelpressanlagen, die je eine Speiseschnecke, einen mit direkter Dampfzufuhr beheizten Mischer (Konditioneur) und eine Würfelpresse aufweisen. Dabei wird der Rohstoff gemischt und erwärmt und in die Form einer warmen, pressbaren Masse gebracht. Diese Masse wird in der Presse verdichtet und durch Brechen (Schneiden) der aus den Pressbohrungen austretenden Stränge zu Würfeln gemacht. Eine solche Anlage ist z.B. in der CH-A-600 792 offenbart und weist eine Speiseschnecke auf, welcher ein mit einer Dampfeinspritzvorrichtung ausgerüsteter Mischer nachgeschaltet ist. Die Speiseschnecke und der Mischer sind durch je einen Antriebsmotor angetrieben. Eine durch einen Pressenmotor angetriebene Würfelpresse ist dem Mischer nachgeschaltet und besitzt eine sich drehende Pressform mit radial verlaufenden Pressbohrungen. Zwei Pressrollen sind drehbar auf einer feststehenden Brücke angebracht, auf welcher noch Speiseflügel befestigt sind. Der Rohstoff wird durch die Speiseschnecke dosiert, im Mischer mit Dampf vermischt und als pressbare Masse der Presse zugeführt. In dieser wird der Rohstoff zwischen der Pressform und den Pressrollen verpresst und über die Pressbohrungen hindurchgepresst, hinausgestossen und geschnitten.

Die Pressbarkeit eines Rohstoffes ist in grossem Mass von der Temperatur abhängig, bei welcher der Pressvorgang stattfindet. Der Durchsatz durch die Presse steigt bei zunehmender Temperatur, bis diese einen für den Rohstoff charakteristischen Temperaturgrenzwert überschreitet. Dazu kommen noch wirtschaftliche Faktoren, die es erfordern, die Betriebstemperatur kleiner als den Temperaturgrenzwert zu wählen, weil in dieser Gegend eine Erhöhung der thermischen Energie kaum eine Ersparnis an elektrischer Energie bringt. Die für eine Rohstoffzusammensetzung so festgelegte Temperatur ist seit vielen Jahren in einer grossen Zahl Betriebe wie folgt eingestellt worden: Zuerst wird die Presse mit wenig Dampf, d.h. mit Mehl von tieferer Temperatur als normal, auf Vollast gebracht. Dann wird etwas Dampf zugesetzt, so dass die Temperatur erhöht wird und die Motorbelastung absinkt. Jetzt kann am Variator der Speiseschnecke mehr Mehl zugespiesen werden, bis wieder Vollast erreicht ist.

Erneut kann die Dampfmenge und damit die Mehltemperatur erhöht werden.

Wenn die Motorbelastung am Amperemeter weiterhin beträchtlich sinkt, so kann nochmals die Speisemenge erhöht werden und so fort, bis eine Temperatur erreicht ist, bei deren Erhöhung nur noch eine kleinere Erhöhung der Pressenleistung stattfindet. Bei dieser Temperatur arbeitet die Presse nahe der höchsten Leistung pro PS und am wirtschaftlichsten bezüglich Ausnützung der Anlage und bezüglich Lebensdauer der Schleissteile.

Die eingestellte Temperatur wird beibehalten, bis im Laufe des Betriebes Änderungen in der Pressbarkeit, z.B. durch Änderungen in der Rohstoffzusammensetzung, insbesondere im Feuchtigkeitsgehalt, und damit in der optimalen Temperatur auftreten, was Massnahmen zur Begegnung der neuen Bedingungen erfordert. Zu diesem Zweck ist der Pressenführer bislang jederzeit bereit gewesen, Korrekturmassnahmen zur Wiederherstellung optimaler Bedingungen, insbesondere der neuen optimalen Temperatur, zu treffen. Er hat auch das Anliegen, eine Temperaturerhöhung über den Grenzwert hinaus zu verhindern, da dies ein Festfahren der Presse zur Folge haben könnte.

Bei dem in der FR-A-1 301 405 offenbarten gattungsgemässen Verfahren zur Steuerung einer Würfelpresse wird die dem Mischer zugeführte Produktmenge in einem ersten Regelkreis (I) so justiert, dass ein konstanter Wert des Pressenmotorstromes (Pressenmotorleistung) aufrechterhalten bleibt. Diese Justierung der Produktmenge wird über einen Schieber am Ausgang der Speisevorrichtung oder durch Änderung der Speiseschneckendrehzahl gewährleistet. Ausserdem wird eine dem Mischer über ein Dampfventil zugeführte Dampfmenge in einem zweiten Regelkreis (II) so justiert, dass eine konstante, als optimal betrachtete Temperatur im Mischer aufrechterhalten bleibt.

In diesem Verfahren wird eine anfängliche Temperatur im Mischer eingestellt und mittels einer Temperaturregelung konstant gehalten.

Bei einem anderen, in der DE-A-2 850 910 offenbarten Verfahren zur Regelung einer Würfelpresse wird ein anfänglicher Betriebszustand mit einer unterhalb der optimalen Temperatur liegenden Temperatur hergestellt, durch Zuführung von Produkt und Dampf in einem konstanten Verhältnis zueinander. In einem anschliessenden Optimierungsvorgang wird ein optimales Verhältnis zwischen Dampfmenge und Rohstoffmenge gesucht durch Erhöhen der Dampfmenge im Verhältnis zur Rohstoffmenge, bis die Motorbelastung zu steigen anfängt, wonach die Dampfmenge vermindert wird. Dieses Verhältnis wird dann während des weiteren Betriebes festgehalten. Wenn dann eine Erhöhung des elektrischen Stromes für den Antrieb der Würfelpresse registriert wird, wird ein neues optimales Verhältnis zwischen Dampfmenge und Rohstoffmenge gesucht. Dies geschieht durch die direkte Beeinflussung des Dampfventils entsprechend dem Strom des Pressenmotors. Das Benützen des Motorstromes des Antriebsmotors der Würfelpresse als Parameter für die Notwendigkeit einer Temperaturregelung führt zu einer gewissen Gefahr des Blockierens der Presse, denn das Verfahren basiert auf einer Überschreitung des Grenzwertes, um den optimalen Betriebszustand zu ermitteln.

Aufgabe der Erfindung ist es, ein Steuerungsverfahren der eingangs genannten Art für eine Würfelpressanlage und eine Vorrichtung zur Durchführung des Verfahrens zu schaffen, mit welchen trotz Einfachheit und hoher Wirtschaftlichkeit des Betriebes neue und veränderte Betriebsbedingungen mit hoher Flexibilität optimal eingestellt werden können und ein Festfahren der Presse mit Sicherheit verhindert werden kann, wobei auch ein hoher Automatisierungsgrad verwirklicht und die Überwachung für den Pressenführer erleichtert werden kann.

Ein Steuerungsverfahren zur Lösung dieser Aufgabe zeichnet sich dadurch aus, dass bei einer Änderung der Drehzahl n, U/min der Speisevorrichtung um einen vorgegebenen Wert $\Delta n$ der Sollwert der Temperatur T um einen vorbestimmten Wert $\Delta T$ geändert wird.

Das Verfahren nach der Erfindung besitzt den Vorteil, dass bei Änderungen der leicht überwachbaren Rohstoffmenge die Temperaturregelung leicht eingreifen und die direkt und kontinuierlich gemessene Temperatur mit hoher Flexibilität ändern kann. Der Betriebspunkt bleibt im sicheren Temperaturbereich gehalten und ein Festfahren der Presse wird verhindert, weil die Regelung des Verhältnisses $\Delta\dot{M}/\Delta T$, bzw. der Neigung der Tangente zur Kurve M = f (T), naturgemäss einen sicheren Betriebspunkt anstrebt, der auf einfacherere und sicherere Art erreicht werden kann. Gleichzeitig hat diese Art der Regelung eine günstige Wirkung auf die Wirtschaftlichkeit des Betriebes, weil das Verhältnis $\Delta\dot{M}/\Delta T$, bzw. die Neigung der Tangente zur Kurve $\dot{M}$ = f(T), auch zeigt, ob sich die erreichte Erhöhung des Durchsatzes beim erhöhten Aufwand an thermischer Energie lohnt. Die Arbeit des Pressenführers ist nun im wesentlichen auf das Eintasten einiger Werte beschränkt, so dass er andere Aufgaben, z.B. die Bedienung mehrerer Pressanlagen übernehmen kann.

Wenn die veranlasste Temperaturänderung $\Delta T$ während der ganzen Dauer einer Regelungsphase gleich gewählt wird, so werden die Regelung und die Steuervorrichtung einfacher, da anstelle vom Verhältnis $\Delta\dot{M}/\Delta T$ die Produktmengenänderung $\Delta\dot{M}$ in Form der Speisepumpendrehzahländerung $\Delta n$ als Steuerungsgrösse verwendet werden kann. Vorzugsweise wird die Motorleistung E durch den elektrischen Strom I, A gemessen.

Eine Vorrichtung zur Durchführung des Verfahrens ist gekennzeichnet durch die Kombination einer Leistungsregelung zum Konstanthalten der Leistung des Antriebsmotors der Würfelpresse durch Steuerung der Drehzahl des Speiseschneckenmotors mit einer Temperatursteuerung zur Anpassung der Temperatur des Produktes im Mischer unter dem Einfluss von Drehzahländerungen des Speiseschneckenmotors.

Vorzugsweise wird ein Mikroprozessor zur Steuerung der Betriebsgrössen vorgesehen. Es ist auch möglich, einen gemeinsamen Mikroprozessor zur Steuerung mehrerer Würfelpressenanlagen vorzusehen. Dabei ist vorzugsweise mindestens einigen der Würfelpressenanlagen je ein Eintastteil zum Eintasten vorgewählter Betriebsgrössen zugeordnet.

Eine besonders bevorzugte Ausführung ist gekennzeichnet durch eine Einrichtung, die feststellt, ob eine Produktmengenänderung in einer bestimmten Zeit stattgefunden hat und falls nicht, eine Temperaturerhöhung veranlasst.

Hierdurch wird eine periodische Selbstprüfung des Steuerungsverlaufes und der Funktionstüchtigkeit der Steuerungsvorrichtung ausgeführt.

Nachstehend werden Ausführungsbeispiele der Erfindung anhand der Zeichnung erläutert. Es zeigen:

Fig. 1 die schematische Darstellung einer Würfelpressenanlage mit Steuerung,

Fig. 2 ein Drehzahl-Temperatur-Diagramm zur Veranschaulichung notwendiger Betriebsänderungen bei Änderungen der Pressbarkeit des der Würfelpresse zugeführten Rohstoffes,

Fig. 3 ein Temperatur-Drehzahl-Diagramm zur Veranschaulichung einer Startphase und einer Phase grober Optimierung,

Fig. 4 ein Drehzahl-Zeit-Diagramm zur Veranschaulichung der Startphase, der Phase grober Optimierung und mehrerer Phasen feiner Optimierung,

Fig. 5 ein Temperatur-Zeit-Diagramm zur Veranschaulichung der Phasen nach Fig. 4,

Fig. 6 ein Laufdiagramm zur Veranschaulichung einer Ausführungsform des Steuerungsverfahrens,

Fig. 7 ein schematisches Diagramm mehrerer, aus einer Steuerzentrale gesteuerten Würfelpressanlagen und

Fig. 8 ein Blockschema einer Variante.

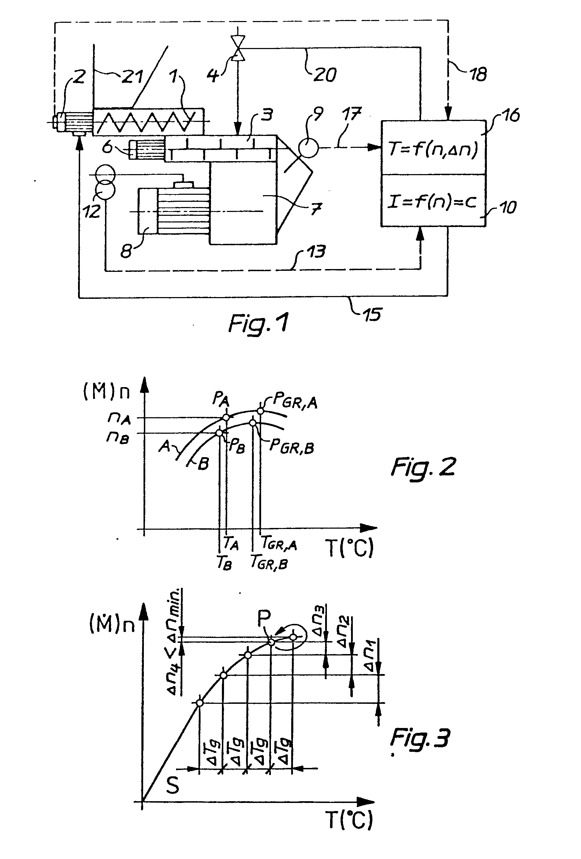

In der Fig. 1 ist eine Speiseschnecke 1 durch einen Speiseschneckenmotor 2 mit steuerbarer Drehzahl angetrieben. Der Speiseschnecke 1 ist ein Mischer 3 als Konditioneur nachgeschaltet, der über ein Dampfventil 4 mit Dampf beaufschlagbar ist und durch einen Mischermotor 6 angetrieben ist. Dem Mischer 3 ist eine Würfelpresse 7 nachgeschaltet, die durch einen Pressenmotor 8 angetrieben ist. Am Ausgang des Mischers 3 ist ein Temperaturfühler 9 angeordnet, der zur Messung der Temperatur des in die Presse 7 eintretenden Rohstoffes vorgesehen ist.

Einer Leistungsregelung 10 für den Pressenmotor 8 wird über einen Strommesser 12 und eine Verbindung 13 der Wert I des elektrischen Stromes des Pressenmotors 8 zugeführt. Die Leistungsregelung 10 steht über der Verbindung 15 mit dem Speiseschneckenmotor 2 in Wirkverbindung und steuert die Drehzahl n des letzteren und damit die Produktmenge $\dot{M}$ so, dass der Stromverbrauch des Pressenmotors 8 gleich dem Sollwert seines Stromes I ist, was bedeutet, dass der Pressenmotor 8 die Presse 7 mit einer optimalen Leistung antreibt, die nahe am Maximum steht. Eine Temperatursteuerung 16 empfängt über eine Verbindung 17 den Temperatur-Istwert vom Temperaturfühler 9 und über eine Verbindung 18 den Drehzahl-Istwert vom Speiseschneckenmotor 2 und beeinflusst mit ihrem Ausgangssignal 20 das Dampfventil 4 zur Zuleitung von Dampf an den Mischer 3. Die Steuerung 10 beeinflusst auch ein nicht gezeigtes Melassenventil zur Zuführung von Melasse in der richtigen Proportion zur Produktmenge, die durch die Speiseschnecke 1 zugeführt wird.

Die nicht im Detail dargestellte Würfelpresse 7 ist herkömmlicher Konstruktion und besitzt eine an sich bekannte Pressform mit radial verlaufenden Pressbohrungen sowie eine oder mehrere Pressrollen, die auf einer feststehenden Brücke drehbar angebracht sind.

Der Rohstoff gelangt über einen Speisetrichter 21 in die Speiseschnecke 1 und wird durch diese dosiert und dem Mischer 3 zugeführt. In diesem wird der Rohstoff mit Dampf gründlich vermischt und zu einer warmen, pressbaren Masse gemacht. Die Rohstoffmischung tritt nun in die Presse 7 über und wird in dieser zwischen der Pressform und den Pressrollen verpresst und durch die Pressbohrungen der Pressform hindurchgepresst.

In der Fig. 2 stellt die Kurve A die Variation der Speiseschneckendrehzahl n in Funktion der Temperatur T des Rohstoffes bei konstanter Pressenmotorleistung I und damit die Pressbarkeit für einen bestimmten Rohstoff dar. Dem Grenzpunkt $P_{GR,A}$ entspricht eine maximale Drehzahl $n_{max}$ und damit eine maximale Produktmenge $\dot{M}_{max}$, bei einem Grenzwert der Temperatur $T_{GR,A}$. Der Punkt $P_A$ hingegen entspricht dem für die anfängliche Rohstoffzusammensetzung als optimal ermittelten Betriebspunkt, der im linken und damit sicheren und wirtschaftlichen Bereich der Kurve A liegt und durch die Drehzahl $n_A$ und die Temperatur $T_A$ gekennzeichnet ist.

Die Kurve B bezieht sich auf eine zu einem späteren Betriebszeitpunkt zufolge veränderter Rohstoffzusammensetzung, z.B. veränderte Feuchtigkeit, veränderte Pressbarkeit. $P_{GR,B}$ entspricht dem neuen Grenzpunkt und $P_B$ dem neuen optimalen Betriebspunkt. Die für die Rohstoffzusammensetzung A optimale Temperatur $T_A$ ist von der für die neue Rohstoffzusammensetzung optimalen Temperatur $T_B$ verschieden.

Die Temperatursteuerung hat nunmehr die Funktion zu erfüllen, einerseits den anfänglichen, optimalen Betriebspunkt einzustellen, andererseits nach Massgabe sich ändernder Rohstoffzusammensetzungen und gegebenenfalls anderer Betriebsstörungen, aufeinanderfolgende und sich voneinander unterscheidende, optimale Betriebspunkte einzustellen und dabei den Betrieb in der sicheren Zone, links von der Grenztemperatur $T_{GR}$ zu halten, um damit der Gefahr eines Festfahrens der Presse vorzubeugen.

Die Steuerung des Pressenbetriebes geht dabei folgendermassen vor sich. In einer Startphase wird dem Mischer 3 Rohstoff und Dampf in einem vorbestimmten Verhältnis zueinander in einer solchen Menge zugeleitet, dass die Temperatur unter der optimalen Temperatur und der Pressenmotorstrom beim Nennstrom I liegt. Dies wird mit Hilfe der Leistungsregelung 10 bewerkstelligt.

Die Fig. 3 zeigt die Startphase S und die anschliessende, grobe Optimierungsphase in einem Temperatur-Drehzahl-Diagramm. In der groben Optimierungsphase wird die Temperatur mittels der Temperaturregelung 11 in aufeinanderfolgenden, gleichen Stufen von $\Delta T_g$, beispielsweise 5°C hochgeregelt. Jedes $\Delta T_g$ bewirkt über die Leistungsregelung 10 eine Erhöhung der Drehzahl n und eine zu dieser proportionale Erhöhung der Produktmenge M. Aufeinanderfolgende Temperaturerhöhungen $\Delta T_g$ bewirken aufeinanderfolgend sich einstellende Drehzahlerhöhungen $\Delta n_1$, $\Delta n_2$, ... $\Delta n_k$, von denen jede mit einer vorgewählten, minimalen Drehzahländerung $\Delta n_{min}$ verglichen wird. Die Unterschreitung des Wertes bedeutet, dass die zur Erhöhung $\Delta T_g$ notwendige thermische Energie keiner genügenden Erhöhung $\Delta \dot{M}$ der Produktmenge entspricht, so dass die Wirtschaftlichkeit leidet. Dies bedeutet auch, dass man sich des Grenzpunktes $P_{GR}$ nähert, und somit, dass die Gefahr des Blockierens der Presse grösser wird.

Wenn $\Delta n_k$ den Wert $\Delta n_{min}$ unterschreitet, wird deshalb die Temperatur um den Betrag $\Delta T_g$ zurückgestellt und die vorletzte Temperatur als Betriebstemperatur behalten.

In der Fig. 3 ist $\Delta n_4 < n_{min}$, und die Temperatur wird um $\Delta T_g$ zurückgestellt. Der Punkt P ist der neue Betriebspunkt nach der ersten groben Optimierung. Das beschriebene Verfahren für die beschriebenen beiden ersten Phasen entspricht somit weitgehend dem seit Jahrzehnten praktizierten.

Spätere Änderungen im Betrieb, die durch Änderung in der Rohstoffzusammensetzung, in der Dampfzuleitung oder durch allgemeine Anlagenveränderungen bedingt sein können, können eine neue Situation schaffen, die eine Änderung der Speiseschneckendrehzahl n und damit der Produktmenge $\dot{M}$ verursacht. Dann wird eine neue, feine Optimierung vorgenommen.

Bei der feinen Optimierung wird die Drehzahl des Speiseschneckenmotors 2 während des Betriebes überwacht und bei einer unter Einwirkung der Leistungsregelung 10 sich einstellenden vorbestimmten Drehzahländerung $\Delta n$ und entsprechender Produktmengenänderung $\Delta \dot{M}$ wird der Sollwert der Temperatur T verändert. Dabei werden drei verschiedene Möglichkeiten berücksichtigt.

Wenn sich eine Drehzahlerhöhung mit mindestens einem vorbestimmten Wert $\Delta n_c$, z.B. 2% von n über dem vorher einregulierten Wert $n_o$ einstellt, wird die Temperatur um $\Delta T_f$, einen bestimmten Wert, z.B. +2°C, erhöht. Die sich anschliessend einstellende Drehzahlerhöhung $\Delta n$

wird nun mit einem Wert $\Delta n_b$ verglichen und der Vorgang in gleichen Stufen von $\Delta T_f$ wiederholt, bis der Wert $\Delta n_k$ den einen vorher eingegebenen Wert $\Delta n_b$ unterschreitet und die Temperatur wieder um $\Delta T_f$ reduziert wird. Ansonsten ist der Vorgang dem vorangehend beschriebenen ähnlich.

Wenn der Wert $\Delta n_k$ den Wert $\Delta n_b$ unterschreitet, wird der Optimierungsvorgang ähnlich wie zuvor abgebrochen und die Temperatur um $\Delta T_f$ vermindert und die vorletzte Temperatur als Betriebstemperatur behalten.

Wenn unter der Einwirkung der Leistungsregelung bei gleichbleibendem Strom und gleichbleibender Temperatur ein Abfall der Drehzahl n um mindestens den voreingestellten Betrag $\Delta n_c$ unter dem vorher einregulierten Wert $n_o$ registriert wird, wird die Temperatur über die Temperaturregelung 16 um einen vorbestimmten Wert $\Delta T$, vorzugsweise $\Delta T_f$ herabgesetzt. Die sich als Folge einstellende Drehzahl $\Delta n$ wird nun mit einem voreingestellten Wert $\Delta n_a$ verglichen und der Vorgang in gleichen Stufen von $\Delta T_f$ solange wiederholt, bis ein sich einstellender Drehzahlabfall $\Delta n_k$ den Wert $\Delta n_a$ überschreitet. Anstelle der $\Delta n$-Werte können $\Delta n/\Delta T$-Werte überwacht und mit einem vorgegebenen Wert $\Delta n_a/\Delta T$ verglichen werden. Dies erlaubt z.B. je nach Temperatur T verschiedene Werte von $\Delta T$ vorzusehen.

Wenn nach einer im Einzelfall zu bestimmenden Zeitspanne $\Delta t_v$, z.B. 10 Minuten, keine Änderung in der vorher einregulierten Drehzahl $n_o$ registriert wird, wird ein neuer Optimierungsversuch unternommen. Zu diesem Zweck wird eine vorzugsweise positive Temperaturänderung $\Delta T_f$ veranlasst und die sich darauf einstellende Drehzahländerung $\Delta n$ registriert. Nun wird in der vorangehend beschriebenen Weise eine neue Optimierung vorgenommen und ein optimaler Betriebspunkt bestimmt, der dem vorherigen gleich oder von diesem verschieden sein kann. Sollte sich wider Erwarten nach der Temperaturerhöhung um $\Delta T_f$ ein Drehzahlabfall einstellen, was auf eine Überschreitung der Grenztemperatur hindeutet, wird der Optimierungsvorgang unterbrochen. Nach einer Herabsetzung der Temperatur in den sicheren Betriebsbereich wird die Optimierung dann wieder aufgenommen.

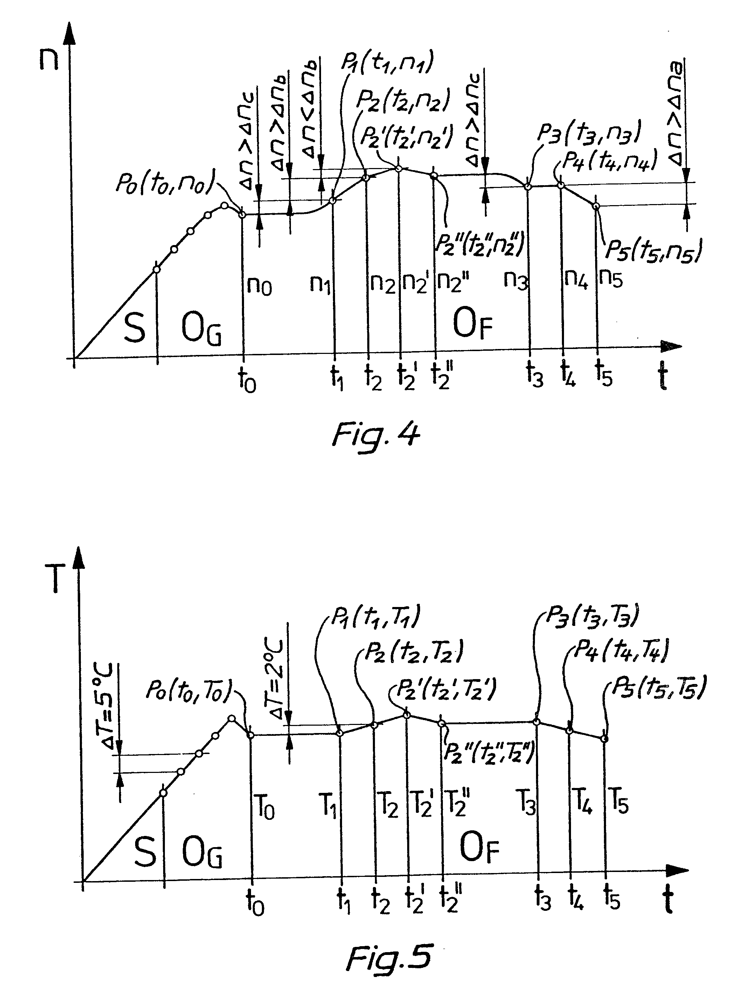

In den Figuren 4 und 5 ist der Verlauf eines beispielsweisen Steuervorgangs veranschaulicht. Die aufeinanderfolgend ausgeführten Steuerungsschritte werden besonders gut verständlich, wenn die Fig. 4 und 5, die beide die Zeit t als Abszisse aufweisen, zusammen betrachtet werden. An dieser Stelle wird nur auf die Phasen $O_F$ feiner Optimierung eingegangen, da die anderen Phasen, die Startphase S und die grobe Optimierungsphase $O_G$, schon im Zusammenhang mit der Fig. 3 erläutert worden sind. Aus zeichnerischen Gründen ist bei diesen beiden Phasen S und $O_G$ ein kleinerer Massstab als bei den Phasen $O_F$ feiner Optimierung benützt worden.

Der Punkt $P_o$ entspricht einem ersten Optimum, das in der Phase grober Optimierung ermittelt wurde. Kurz vor dem Zeitpunkt $t_1$ beginnt sich eine Drehzahlerhöhung $\Delta n$ einzustellen. Diese erreicht den vorbestimmten Betrag $\Delta n_c$ im Zeitpunkt $t_1$. Die Temperatur bleibt dabei unverändert, d.h. $T_1 = T_o$. Nun wird die Temperatur $T_1$ um $\Delta T_f = 2°C$ erhöht. Dabei stellt sich eine neue Drehzahl $n_2$ ein, die aber relativ zu $n_1$ genug angestiegen ist, $\Delta n > \Delta n_b$ um eine weitere Korrekturmassnahme zu gerechtfertigen. Eine weitere Erhöhung der Temperatur von $T_2$ aus um $\Delta T_f = 2°C$ verursacht dann eine neue Drehzahl $n_{2''}$, die aber relativ zu $n_2$ eine zu kleine Erhöhung $\Delta n < \Delta n_b$ veranlasst. Die Temperatur wird um $\Delta T_f = 2°C$ vermindert, so dass $T_{2''} = T_2$, und die Drehzahl kommt zurück auf einen Wert $n_{2''}$, der ungefähr gleich ist wie $n_2$.

Kurz vor dem Zeitpunkt $t_3$ wird eine Drehzahlsenkung registriert, die im Zeitpunkt $t_3$ den vorbestimmten Wert $\Delta n_c$ erreicht, was eine Korrekturmassnahme erfordert. Die Temperatur wird um $\Delta T_f = 2°C$ auf $T_4$ herabgesetzt. Dies ruft jedoch keine zusätzliche Änderung in der Drehzahl hervor, d.h. $n_4 = n_3$, was bedeutet, dass der Betrieb im unsicheren Bereich, in der Nähe der Grenztemperatur verläuft. Nun wird die Temperatur wieder um $\Delta T_f = 2°C$ herabgesetzt. Die sich einstellende Drehzahlsenkung $\Delta n$ überschreitet nun den vorgegebenen Wert $\Delta n_a$, so dass das notwendige Kriterium für ein neues Optimum erfüllt ist. $P_5$ wird als der neue, optimale Betriebspunkt belassen.

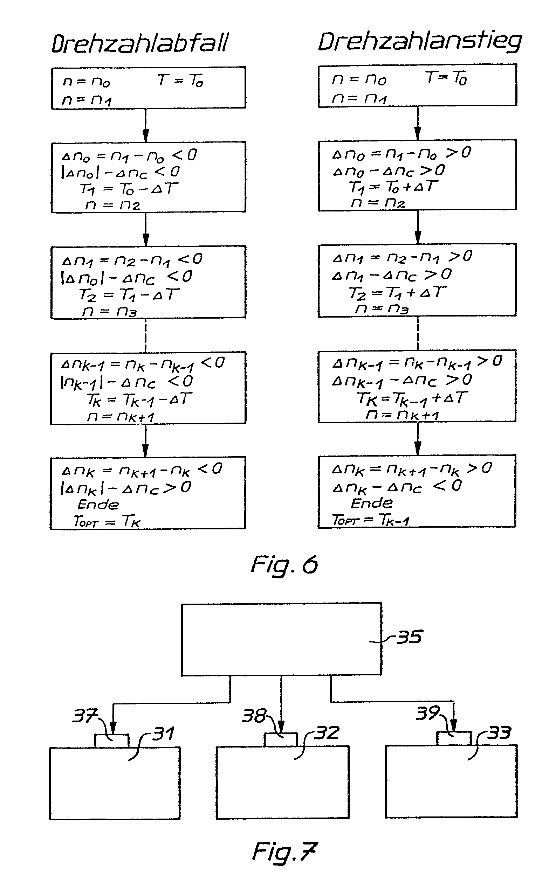

Die Fig. 6 veranschaulicht einen Steuerungsvorgang in der Form eines Laufdiagramms. Dieses Diagramm zeigt die Folge der notwendigen Verfahrensschritte, einerseits für einen Drehzahlabfall, andererseits für einen Drehzahlanstieg und kann z.B. zur Programmierung der Temperatursteuerung zweckmässig verwendet werden. Es ist zu beachten, dass in Fig. 6 die Werte $n_1$, $n_2$ usw. nicht die gleiche Bedeutung wie in Fig. 4, 5 haben, sondern irgendeine Serie bezeichnen. Beim Drehzahlanstieg wird als optimale Temperatur $T_{OPT}$ die vorletzte Temperatur $T_{k-1}$ als Betriebstemperatur gewählt.

Als Steuervorrichtung 10, 16 kann zweckmässig ein Mikroprozessor verwendet werden, der sowohl die Leistungsregelung als auch die Temperatursteuerung bewerkstelligen kann. Über einen Mikroprozessor können aber auch mehrere Würfelpressanlagen gleichzeitig gesteuert werden. Als Beispiel sind in der Fig. 7 drei verschiedene Würfelpressanlagen 31, 32, 33 an einen zentralen Mikroprozessor 35 angeschlossen. Jede Anlage besitzt einen an der Presse angeordneten, dem Pressenführer zugänglichen Eintastteil 37, 38, 39 zur einzelnen Eingabe der durch ihn zu bestimmenden Betriebsgrössen für jede Anlage, z.B. des maximalen Stromes, der Werte $\Delta n_{min}$, $\Delta n_a$, $\Delta n_b$, $\Delta n_c/\Delta T$ usw. Der Mikroprozessor könnte im zentralen Computerraum untergebracht und zusammen mit anderen Steuergeräten durch das Computerpersonal bedient werden. Selbstverständlich können mit einem Mikroprozessor nicht nur drei, sondern eine ganze Reihe von Würfelpressanlagen erfolgreich gesteuert werden.

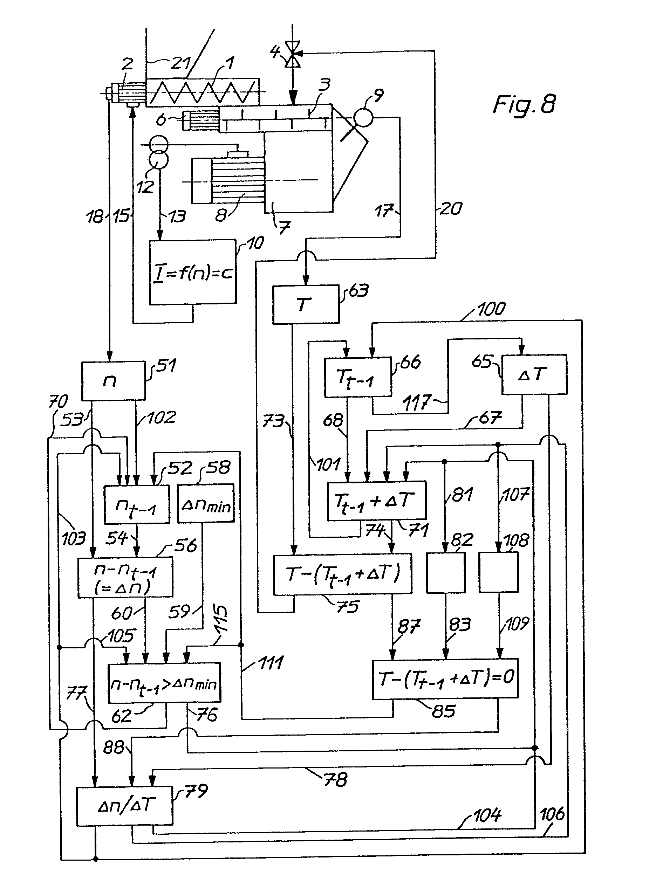

Die Fig. 8 zeigt ein Blockschema einer Ausführungsform der Erfindung für die gleiche Würfelpressanlage wie die Fig. 1, deren Bezugszeichen benützt werden. Die Leistungsregelung 10 ist bekannt und wird seit Jahren angewendet.

Die Verbindung 18 meldet die Drehzahl n des Speiseschneckenmotors 2 als Regelgrösse 51. Die Regelgrösse 51 und der Sollwert 52 für die Drehzahl $n_{t-1}$, die am Ende der vorherigen Regelphase bestimmt worden ist, sind über Verbindungen 53 bzw. 54 mit einem Subtrahierer 56, der den Wert $\Delta n = n - n_{t-1}$ berechnet. Eine Eingabe 58 für die minimale werksame Änderung $\Delta n_{min}$ der Drehzahl n des Speiseschneckenmotors 2 und der Subtrahierer 56 sind über Verbindungen 59 bzw. 60 mit einem Komparator 62 für den Vergleich des absoluten Wertes von $\Delta n$ mit $\Delta n_{min}$, wobei auch das Vorzeichen von $\Delta n$ festgestellt wird.

Die Verbindung 17 meldet die Temperatur T des zu verpressenden Produktes als Regelgrösse 63. Eine Eingabe 65 für den Temperatursprung $\Delta T$ und der Sollwert 66 für die Temperatur $T_{t-1}$, die am Ende der vorherigen Regelphase bestimmt worden ist, sind über Verbindungen 67 bzw. 68 mit einem Addierer 71 verbunden, der den Wert $T_{t-1} + \Delta T$ bildet. Die Regelgrösse 63 und der Addierer 71 sind über Verbindungen 73 bzw. 74 mit einem Subtrahierer 75 zur Bildung der Differenz $T - (T_{t-1} + \Delta T)$, die über die Verbindung 20 das Dampfventil 4 steuert.

Der Komparator 62 ist über eine Verbindung 76 mit dem Addierer 71 verbunden. Sobald der absolute Wert von $\Delta n$ grösser ist als $\Delta n_{min}$, gibt der Komparator einen Impuls ab, der das Zurechnen von $\Delta T$ mit dem korrekten Vorzeichen veranlasst. Vor diesem Impuls überträgt der Addierer 71 erst den Wert von $T_{t-1}$ an den Subtrahierer 75. Ferner gibt der Komparator 62 über eine Verbindung 70 gleichzeitig wie der Impuls der Verbindung 76 einen Impuls auf den Sollwert 52, welcher den Wert n der Regelgrösse 51 im Zeitpunkt des Impulses anstatt des bisherigen Wertes $n_{t-1}$ übernimmt.

Der Subtrahierer 56 und die Eingabe 65 sind über Verbindungen 77 bzw. 78 mit einem Dividierer 79 zur Bildung des Verhältnisses $\Delta n / \Delta T$ verbunden. Im Dividierer 79 sind eine Aufgabe für die gewünschten Werte von $\Delta n / \Delta T$ und ein Komparator eingebaut. Die Verbindung 76 aus dem Komparator 62 führt den Impuls über eine Abzweigung 81 zu einem Zeitrelais 82, das über eine Verbindung 83 zu einem Komparator 85 führt, der andererseits vom Subtrahierer 75 über eine Verbindung 87 gespiesen wird. Der Komparator 85 überwacht den Wert von $T - (T_{t-1} + \Delta T)$, und wenn dieser gleich Null wird, leitet er über eine Verbindung 88 einen Impuls an den Dividierer 79 zu dessen Einschalten.

Der Dividierer 79 stellt fest, ob $\Delta n / \Delta T$ gross genug ist, wenn $\Delta T$ positiv ist, bzw. ob $\Delta n / \Delta T$ zu klein ist, wenn $\Delta T$ negativ ist. In beiden Fällen wird die Optimierung fortgesetzt mit dem neuen Wert von T. Zur Übertragung des entsprechenden Impulses ist der Dividierer 79 über eine Verbindung 100 mit dem Sollwert 66 verbunden. Der Impuls veranlasst den Sollwert 66, den neuen

Wert $T_t = T_{t-1} + \Delta T$ als neuen Sollwert für den nächsten Optimierungsschritt zu übernehmen. Zur Übertragung des Wertes $T_{t-1} + \Delta T$ dient eine Verbindung 101 vom Addierer 71 zum Sollwert 66. Der Dividierer 79 ist ferner über eine Verbindung 103 mit dem Sollwert 52 verbunden. Ein gleichzeitiger Impuls wie bei der Verbindung 100 veranlasst den Sollwert 52, den Wert von n als neuen Sollwert $n_t$ für den nächsten Optimierungsschritt zu übernehmen. Zur Übertragung des Wertes von n dient eine Verbindung 102 von der Regelgrösse 51 zum Sollwert 52. Der gleiche Impuls vom Dividierer 79 über eine Verbindung 105 stellt die Bereitschaft des Komparators 62 für den nächsten Optimierungsschritt wieder her. Mit einer leichten Verzögerung gegenüber dem Impuls bei der Verbindung 100 (die Änderung beim Sollwert 66 muss stattgefunden haben) gibt der Dividierer 79 über eine Verbindung 104, die zur Verbindung 76 führt, einen Impuls auf den Addierer 71, der das Zurechnen von $\Delta T$ mit dem gleichen Vorzeichen wie vorher veranlasst. Der nächste Optimierungsschritt ist somit ausgelöst und läuft ähnlich wie der vorher beschriebene ab.

Wenn der Dividierer 79 feststellt, dass $\Delta n / \Delta T$ gross genug ist, wenn $\Delta T$ negativ ist, werden die Sollwerte 52 und 66, gleich wie im vorherigen Absatz beschrieben, verändert. Dagegen unterbleibt der Impuls vom Dividierer 79 über die Verbindung 104.

Wenn der Dividierer 79 feststellt, dass $\Delta n / \Delta T$ zu klein ist, wenn $\Delta T$ positiv ist, überträgt er über eine Verbindung 106 einen Impuls zum Addierer 71. Dieser Impuls hebt die Übernahme von $\Delta T$ im Addierer 71 auf, so dass dieser über die Verbindung 74 wieder den Wert von $T_{t-1}$ an den Subtrahierer 75 überträgt. Der Sollwert $T_{t-1}$ bleibt unverändert ($T_t = T_{t-1}$). Eine Verbindung 107 führt vom Dividierer 79 zu einem Zeitrelais 108 verzögerten Impuls zur Einschaltung des Komparators 85. Wenn der Wert von $T - T_{t-1}$ ($\Delta T$ wird jetzt nicht mehr übertragen) den Wert Null erreicht, wird über die Verbindung 111 ein Impuls an den Sollwert 52 zur Übernahme des Wertes der Regelgrösse 51 als neuer Sollwert $n_t$ für die nächste Optimierungsstufe abgegeben. Die Verzögerung durch das Zeitrelais 108 (wie diejenige durch das Zeitrelais 82) verhindert, dass der Komparator 85 zu früh nach der Änderung im Addierer 71 eingeschaltet wird und den Wert o meldet, bevor die Steuerung wieder stabilisiert ist.

Eine Verbindung 115 zweigt von der Verbindung 111 ab, um den gleichen Impuls aus dem Komparator 85 dem Komparator 62 zuzuführen, damit die Bereitschaft dieses Komparators 62 für die nächste Optimierungsoperation wieder hergestellt wird.

Es ist am einfachsten, gleiche Temperatursprünge $\Delta T$ vorzusehen. Wie die Verbindung 117 zwischen dem Sollwert 66 und der Eingabe 65 zeigt, wäre es möglich, ein Programm $\Delta T = f(T_{t-1})$ einzugeben, wobei die Temperatursprünge bei wachsender Temperatur z.B. kleiner gewählt werden können.

Es wäre auch möglich, den Dividierer 79 mit der Eingabe 65 zu verbinden, um nach Ende der ersten, groben Optimierungsphase kleinere Werte von $\Delta T$ zu veranlassen.

## Patentansprüche

1. Verfahren zur Steuerung einer Würfelpressanlage, bei welcher das Produkt mittels Pressrollen durch Bohrungen einer Pressform hindurch gepresst wird, wobei die Leistung $\dot{E}$, kW des Pressenmotors (8) durch Veränderung der der Würfelpresse zugeführten Produktmenge $\dot{M}$, kg/s auf einem Sollwert konstant gehalten und die Temperatur T, °C des zugeführten Produktes durch eine Temperaturregelung auf einen Sollwert geregelt wird, dadurch gekennzeichnet, dass bei einer Änderung der Drehzahl n, U/min der Speisevorrichtung (1) um einen vorgegebenen Wert $\Delta n$ der Sollwert der Temperatur T um einen vorbestimmten Wert $\Delta T$ geändert wird.

2. Verfahren nach Anspruch 1, dadurch gekennzeichnet, dass die Motorleistung E durch den elektrischen Strom I, A gemessen wird.

3. Vorrichtung zur Durchführung des Verfahrens nach Anspruch 1 oder 2, gekennzeichnet, durch die Kombination einer Leistungsregelung (10) zum Konstanthalten der Leistung des Antriebsmotors (8) der Würfelpresse (7) durch Steuerung der Drehzahl des Speiseschneckenmotors (2) mit einer Temperatursteuerung (16) zur Anpassung der Temperatur des Produktes im Mischer (3) unter dem Einfluss von Drehzahländerungen $\Delta n$ des Speiseschneckenmotors (2).

4. Vorrichtung nach Anspruch 3, dadurch gekennzeichnet, dass ein Mikroprozessor (13) zur Steuerung der Betriebsgrössen vorgesehen ist.

5. Vorrichtung nach Anspruch 4, dadurch gekennzeichnet, dass ein gemeinsamer Mikroprozessor (35) zur Steuerung mehrerer Würfelpressanlagen (31, 32, 33) vorgesehen ist.

6. Vorrichtung nach Anspruch 5, dadurch gekennzeichnet, dass mindestens einigen der Würfelpressanlagen (31, 32, 33) je ein Eintastteil (37, 38, 39) zum Eintasten vorgewählter Betriebsgrössen zugeordnet ist.

## Claims

1. A method of controlling a pellet press wherein the product is pressed by means of press rollers through the bores of a press die, wherein the power $\dot{E}$, kW of the motor of the press is held constant at a desired value by varying the quantity of the product $\dot{M}$, kg/s which is supplied to the pellet press and wherein the temperature T, °C of the product supplied to the press is regulated to a desired value by means of a temperature regulation, characterised in that, when a change of the speed n, U/min of the feed apparatus by a predetermined amount $\Delta n$ occurs, the desired value of the temperature T is changed by a predetermined value $\Delta T$.

2. A method in accordance with claim 1, characterised in that the motor power E is measured via the electrical current I, A.

3. Apparatus for carrying out the method of claim 1 or claim 2, characterised by the combination of a power regulation (10) for keeping the power of the drive motor (8) of the pellet press (7) constant by controlling the speed of the motor (2) which drives the feed screw, with a temperature control (16) for adapting the temperature of the product in the mixer (3) under the influence of changes $\Delta n$ in the speed of rotation of the motor (2) for the feed screw.

4. Apparatus in accordance with claim 3, characterised in that a microprocessor (13) is provided for controlling the operating parameters.

5. Apparatus in accordance with claim 4, characterised in that a common microprocessor (35) is provided for controlling several pellet presses (31, 32, 33).

6. Apparatus in accordance with claim 5, characterised in that at least some of the pellet presses (31, 32, 33) each have an input part (37, 38, 39) for keying in preselected operating parameters.

## Revendications

1. Procédé pour commander une installation de presse à granuler selon lequel le produit est pressé au moyen de rouleaux de pressage à travers les perforations d'une filière, la puissance $\dot{E}$, en kW du moteur (8) de la presse étant maintenue constante à une valeur nominale par modification de la quantité de produit $\dot{M}$, en kg/s amenée à la presse à granuler et la température T, en °C du produit amené étant régulée à une valeur nominale par une régulation de température, caractérisé en ce que, lors d'une modification du nombre de tours n, en tr/min du dispositif d'alimentation (1) d'une valeur prédéterminée $\Delta n$, la valeur nominale de la température T est modifiée d'une valeur prédéterminée $\Delta T$.

2. Procédé selon la revendication 1, caractérisé en ce que la puissance du moteur E est mesurée par le courant électrique I en A.

3. Dispositif pour mettre en œuvre le procédé selon la revendication 1 ou 2, caractérisé par la combinaison d'une régulation de puissance (10) pour maintenir constante la puissance du moteur de commande (8) de la presse à granuler (7) par commande du nombre de tours du moteur (2) de la vis sans fin d'alimentation ayant une commande de température (16) pour l'adaptation de la température du produit dans le mixeur (3) sous l'influence des variations du nombre de tours $\Delta n$ du moteur (2) de la vis sans fin d'alimentation.

4. Dispositif selon la revendication 3, caractérisé en ce qu'on prévoit un microprocesseur (13) pour commander les paramètres de fonctionnement.

5. Dispositif selon la revendication 4, caractérisé en ce qu'on prévoit un microprocesseur commun (35) pour commander plusieurs installations de presse à granuler (31, 32, 33).

6. Dispositif selon la revendication 5, caractérisé en ce qu'on associe à au moins quelques-

**0 063 825**

unes des installations de presse à granuler (31, 32, 33) une partie de détection respective (37, 38, 39) pour détecter des paramètres de fonctionnement présélectionnés.

Fig. 1

Fig. 2

Fig. 3

Fig. 4

Fig. 5

## Drehzahlabfall

$$n = n_0 \qquad T = T_0$$
$$n = n_1$$

$$\Delta n_0 = n_1 - n_0 < 0$$
$$|\Delta n_0| - \Delta n_c < 0$$
$$T_1 = T_0 - \Delta T$$
$$n = n_2$$

$$\Delta n_1 = n_2 - n_1 < 0$$
$$|\Delta n_0| - \Delta n_c < 0$$
$$T_2 = T_1 - \Delta T$$
$$n = n_3$$

$$\Delta n_{k-1} = n_k - n_{k-1} < 0$$
$$|n_{k-1}| - \Delta n_c < 0$$
$$T_k = T_{k-1} - \Delta T$$
$$n = n_{k+1}$$

$$\Delta n_k = n_{k+1} - n_k < 0$$
$$|\Delta n_k| - \Delta n_c > 0$$
$$Ende$$
$$T_{OPT} = T_K$$

## Drehzahlanstieg

$$n = n_0 \qquad T = T_0$$
$$n = n_1$$

$$\Delta n_0 = n_1 - n_0 > 0$$
$$\Delta n_0 - \Delta n_c > 0$$
$$T_1 = T_0 + \Delta T$$
$$n = n_2$$

$$\Delta n_1 = n_2 - n_1 > 0$$
$$\Delta n_1 - \Delta n_c > 0$$
$$T_2 = T_1 + \Delta T$$
$$n = n_3$$

$$\Delta n_{k-1} = n_k - n_{k-1} > 0$$
$$\Delta n_{k-1} - \Delta n_c > 0$$
$$T_K = T_{k-1} + \Delta T$$
$$n = n_{k+1}$$

$$\Delta n_k = n_{k+1} - n_k > 0$$
$$\Delta n_k - \Delta n_c < 0$$
$$Ende$$
$$T_{OPT} = T_{k-1}$$

## Fig. 6

## Fig. 7

Fig.8